# EUROPEAN PATENT APPLICATION

(11) **EP 4 506 711 A1**
(43) Date of publication of application: **12.02.2025**
(21) Application number: 23190807.0
(22) Date of filing: 10.08.2023
(51) Int. Cl.: G01S 5/00

(54) **RADIO TERMINALS FOR A RADIO COMMUNICATIONS NETWORK AND METHODS TO OPERATE SAID RADIO TERMINALS**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

There is provided a method to operate a radio terminal, especially a server radio terminal (UE#1) or target radio terminal (UE#2), the method comprising: receiving (130, 150, 160), via a sidelink channel, at least one sidelink measurement report (MES#1-5) associated with at least one of a plurality of radio terminals (UE#1-3) participating in a sidelink positioning procedure (SLP), wherein the at least one sidelink measurement report (MES#1-5) indicates at least one relative position of at least one of the radio terminals (UE#1-3) participating in the sidelink positioning procedure (SLP); receiving (170), via the sidelink channel, at least one absolute position information (AP#3) from at least one anchor radio terminal (UE#3), wherein the at least one absolute position information (AP#3) indicates an absolute position and absolute orientation of the at least one anchor radio terminal (UE#3) that participates in a sidelink positioning procedure (SLP).

## Description

### Prior Art

The use of sidelink positioning in the context of V2X is a promising technology in the field of intelligent transportation systems. This technology aims to provide accurate and reliable location information to vehicles and infrastructure devices for improved safety and efficiency on the roads. With the increasing number of connected vehicles and the growing demand for real-time information exchange, sidelink positioning is gaining traction as a key solution for V2X communication.

### Disclosure of the invention

The problems of the prior art are solved by radio terminals and methods to operate said radio terminals according to the independent claims.

An aspect of the description is directed to the following subject matter: A radio terminal especially a server radio terminal or target radio terminal, comprising at least one processor; at least one memory including computer program code; and at least one radio communication module; the at least one processor, the at least one memory, the at least one computer program code, and the at least one radio communications module cause the radio terminal to perform at least: receiving, via a sidelink channel, at least one sidelink measurement report associated with at least one of a plurality of radio terminals participating in a sidelink positioning procedure, wherein the at least one sidelink measurement report indicates at least one relative position of at least one of the radio terminals participating in the sidelink positioning procedure; receiving, via the sidelink channel, at least one absolute position information from at least one anchor radio terminal, wherein the at least one absolute position information indicates an absolute position and absolute orientation of the at least one anchor radio terminal that participates in a sidelink positioning procedure.

Advantageously, the target UEs absolute position can be determined if the anchor UE with an absolute position available is present and preferably in reach of the target or server UE. The anchor UE with an a-priori known absolute position therefore enables the sidelink positioning procedure to determine or refine an absolute position and absolute orientation of a target UE.

An advantageous example comprises: determining an absolute position information indicating an absolute position and absolute orientation of a target radio terminal based on the received at least one absolute position information indicating the absolute position and absolute orientation of the at least one anchor terminal, and based on the at least one sidelink measurement report.

An advantageous example comprises: transmitting, via a sidelink channel or via an uplink channel, the at least one sidelink measurement report along with the at least one absolute position information from at least one anchor radio terminal.

An advantageous example is characterized in that the radio terminal further performs: transmitting, via the sidelink channel, a request to provide the at least one absolute position information; and wherein the at least one absolute position information is received as a response to the request.

Advantageously, the absolute position information is only transmitted on request in order to reduce the radio traffic necessary for sidelink positioning.

An advantageous example is characterized in that the radio terminal further performs: receiving, via a sidelink channel, a capability indicator that indicates the capability of at least one of the anchor radio terminals to provide the absolute position and absolute orientation of the at least one of the anchor radio terminals.

Advantageously, the server or target radio terminal is aware of the absolute positioning capability of the anchor UE. Therefore, the subsequent sidelink positioning procedure can be adapted in order to reduce measurement overhead.

Moreover, the positioning procedure could be adapted in order to terminate earlier. Exploiting the a-priori known absolute positions of anchor radio terminals is therefore beneficial. The knowledge of the availability of the absolute position before starting the actual measurements is even more beneficial.

An advantageous example is characterized in that the at least one or a further received sidelink measurement report indicates a relative position of the target radio terminal in relation to the at least one anchor radio terminal that is able to provide its absolute position.

Advantageously, this measurement provides a direct measurement between the target UE and a known absolute position.

An advantageous example is characterized in that the at least one or a further received sidelink measurement report indicates a relative position of a further anchor radio terminal in relation to the at least one anchor radio terminal that is able to provide its absolute position.

Advantageously, this measurement provides a measurement for increasing the accuracy of the determination of the absolute position and absolute orientation of the target UE.

An advantageous example is characterized in that the at least one or a further received sidelink measurement report indicates a relative position of a further anchor radio terminal in relation to at least one another anchor radio terminal that is not able to provide its absolute position.

Advantageously, this measurement provides a measurement for increasing the accuracy of the determination of the absolute position and absolute orientation of the target UE.

An aspect of the description is directed to the following subject matter: A method to operate a radio terminal especially a server radio terminal or target radio terminal, the method comprising: receiving, via a sidelink channel, at least one sidelink measurement report associated with at least one of a plurality of radio terminals participating in a sidelink positioning procedure, wherein the at least one sidelink measurement report indicates at least one relative position of at least one of the radio terminals participating in the sidelink positioning procedure; receiving, via the sidelink channel, at least one absolute position information from at least one anchor radio terminal, wherein the at least one absolute position information indicates an absolute position and absolute orientation of the at least one anchor radio terminal that participates in a sidelink positioning procedure; and determining an absolute position information indicating an absolute position and absolute orientation of a target radio terminal based on the received at least one absolute position information indicating the absolute position and absolute orientation of the at least one anchor terminal, and based on the at least one sidelink measurement report.

An aspect of the description is directed to the following subject matter: An anchor radio terminal comprising at least one processor; at least one memory including computer program code; and at least one radio communication module; the at least one processor the at least one memory, the at least one computer program code, and the at least one radio communications module cause the anchor radio terminal to perform at least: a-priori knowing an absolute position and absolute orientation of the anchor radio terminal; transmitting, via a sidelink channel, at least one absolute position information to a server or target radio terminal, wherein the at least one absolute position information indicates the a-priori known absolute position and absolute orientation of the anchor radio terminal that participates in a sidelink positioning procedure.

Advantageously, the target UEs absolute position can be determined if the anchor UE with an absolute position available is present and preferably in reach of the target or server UE. The anchor UE with an a-priori known absolute position therefore enables the sidelink positioning procedure to determine or refine an absolute position and absolute orientation of a target UE.

An advantageous example is characterized in that the anchor radio terminal further performs: receiving, via the sidelink channel, a request to provide the at least one absolute position information; wherein the absolute position information is transmitted as a response to the request.

An advantageous example is characterized in that the anchor radio terminal further performs: transmitting, via a sidelink channel, a capability indicator that indicates the capability of the anchor radio terminal to provide the absolute position and absolute orientation of the anchor radio terminal.

An advantageous example is characterized in that the anchor radio terminal further performs: determining at least one sidelink measurement report associated with a target radio terminal, the at least one sidelink measurement report indicates at least one relative position of the target radio terminal participating in the sidelink positioning procedure with respect to the anchor radio terminal; and transmitting, via the sidelink channel, the at least one sidelink measurement report.

Advantageously, this measurement report increases the accuracy of the determination of the absolute position and absolute orientation of the target UE at the side of the server UE.

An advantageous example is characterized in that the anchor radio terminal further performs: determining at least one sidelink measurement report associated with a further anchor radio terminal, the at least one sidelink measurement report indicates at least one relative position of the further anchor radio terminal participating in the sidelink positioning procedure with respect to the anchor radio terminal; and transmitting, via the sidelink channel, the at least one sidelink measurement report.

Advantageously, this measurement report increases the accuracy of the determination of the absolute position and absolute orientation of the target UE at the side of the server UE.

An advantageous example is characterized in that the anchor radio terminal has a fixed position at least during the sidelink positioning procedure.

According to a further aspect of the invention there is provided a computer program comprising instructions to cause the radio terminal, or its embodiments, to execute the steps of the above-mentioned method to operate the radio terminal, or its embodiments, and/or to cause the anchor radio terminal to execute the steps of the above-mentioned method to operate the anchor radio terminal, or its embodiments. Moreover, there is provided a computer-readable having stored thereon the above-mentioned computer program.

An aspect of the description is directed to the following subject matter: A method to operate an anchor radio terminal, the method comprising: a-priori knowing an absolute position and absolute orientation of the anchor radio terminal; transmitting, via a sidelink channel, at least one absolute position information to a server or target radio terminal, wherein the at least one absolute position information indicates the a-priori known absolute position and absolute orientation of the anchor radio terminal that participates in a sidelink positioning procedure.
- Figure 1: depicts a method to operate a radio communications network in a schematic sequence diagram;
- Figure 2: depicts a method to operate a server radio terminal in a schematic flow diagram;
- Figure 3 to 9: depict schematically exemplary situations for location determination;
- Figure 10: depicts radio terminals in a schematic block diagram.

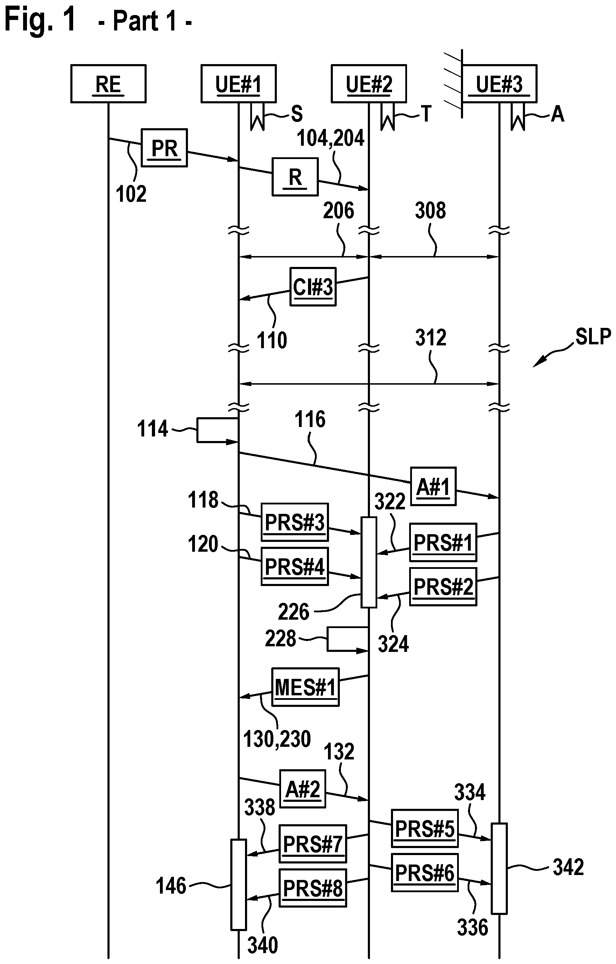

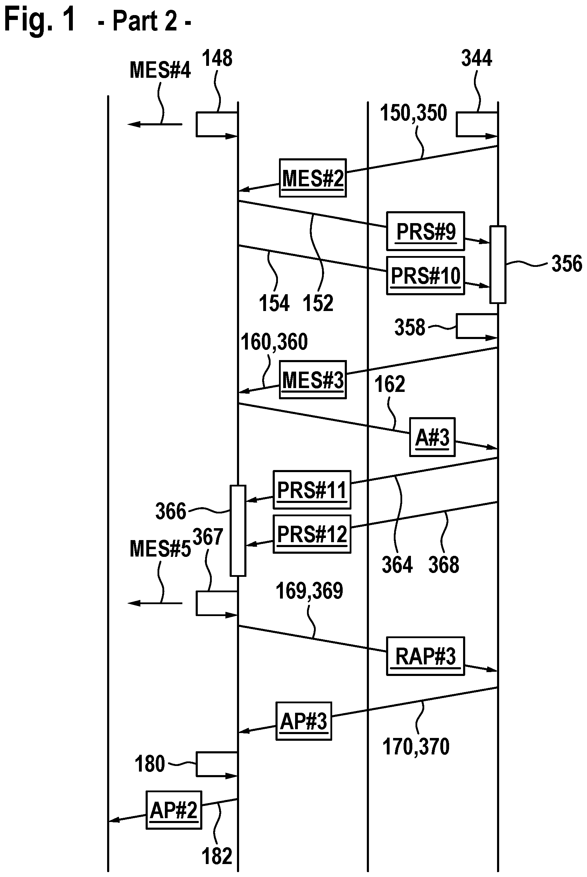

Figure 1 depicts a method to operate a radio communications network in a schematic sequence diagram. A radio terminal UE#1 that has a server role S in a shown sidelink positioning procedure SLP receives 102 a positioning request PR indicating to determine a position of a radio terminal UE#2 that has a target role T in the sidelink positioning procedure. The target role T implies that the associated radio terminal UE#2 is subject to the SLP in order to determine the position of the target radio terminal UE#2.

Alternatively, the positioning request PR can originate from UE#1 itself.

Upon reception of the positioning request, UE#1 transmits 104 a request R towards the target radio terminal UE#2, indicating that the at least one sidelink positioning procedure SLP.

Upon receiving 204 the request R, UE#2 starts a sidelink discovery procedure 206, 308 in order to discover candidates for the sidelink positioning procedure SLP. Upon terminating the sidelink discovery procedure 206, 308, UE#2 transmits 220 a list of candidate radio terminals for the SLP, in particular a capability indicator CI#3 that indicates the capability of the anchor radio terminal UE#3 to provide the absolute position and absolute orientation of the anchor radio terminal UE#3.

The radio terminal UE#3 has an anchor role A for the SLP and has a fixed position.

Additionally or alternatively, the server radio terminal UE#1 starts a sidelink discovery procedure 312 to discover candidate radio terminals to participate as anchor radio terminals in the SLP.

UE#1 transmits 116 an activation signal A#1 to UE#3 for UE#3 to start transmitting 322, 324 positioning reference signals PRS#1-2 towards UE#2. UE#2 listens 226 to the received positioning reference signals PRS#1-2 and determines 228 at least partly a measurement report MES#1 that is transmitted 230 towards UE#1.

Additionally or alternatively, UE#1 transmits 118, 120 positioning reference signals PRS#3-4 towards UE#2. UE#2 listens 226 to the received positioning reference signals PRS#1-2 and determines 228 at least partly the measurement report MES#1 that is transmitted 230 towards UE#1.

UE#1 transmits 132 an activation signal A#2 to UE#2 for UE#2 to start transmitting 334, 336 positioning reference signals PRS#5-6 towards UE#3 and/or to start transmitting 338, 340 positioning reference signals PRS#7-8 towards UE#1. UE#3 listens 342 to the received positioning reference signals PRS#5-6 and determines 344 a measurement report MES#2 that is transmitted 350 towards UE#1. UE#1 listens 146 to the received positioning reference signals PRS#7-8 and determines 148 a measurement report MES#4 that is used to determine the absolute position and absolute orientation of the target radio terminal UE#2.

UE#1 starts transmitting 152, 154 positioning reference signals PRS#9-10 towards UE#3. UE#3 listens 356 to the positioning reference signals PRS#9-10 and determines 358 a measurement report MES#3. The measurement report MES#3 is transmitted 360 to the server radio terminal UE#1.

UE#1 transmits an activation signal A#3 to UE#2 for UE#2 to start transmitting 364, 368 positioning reference signals PRS#11-12 towards UE#1. UE#1 listens 366 to the received positioning reference signals PRS#11-12 and determines 367 a measurement report MES#5 that is used later on for determination of the absolute position and absolute orientation of the target radio terminal UE#2.

UE#1 transmits 169, via the sidelink channel, a request RAP#3 to provide the at least one absolute position information AP#3. UE#3 transmits 370, in response to RAP#3, its at least one absolute position information AP#3 that is received 170 at UE#1 as the response to the request RAP#3.

UE#1 determines 180 the absolute position information AP#2 indicating the absolute position and absolute orientation of a target radio terminal UE#2 based on the received at least one absolute position information AP#3 indicating the absolute position and absolute orientation of the at least one anchor terminal UE#3, and based on the at least one received or determines sidelink measurement report MES#1-5 or on a plurality of the received or determined sidelink measurement reports MES#1-5.

UE#1 transmits 182, as a response to the received positioning request PR, the determined absolute position information AP#2 to the requesting entity RE. The requesting entity RE could be one of the radio terminals UE#1-3 or a further entity not shown in figure 1.

The respective measurement report MES#1-5 comprises at least one relative position information. The at least one relative position information comprises, for example, a distance indicator indicating a distance between two radio terminals of the radio terminals UE#1-3 participating in the SLP. The at least one relative position information comprises, for example, an angle of arrival measurement that indicates the angle of arrival of the received sidelink positioning reference signals PRS#1-12.

Instead of transmitting the respective distance, the distance indicator may also comprise the time of flight, the distance being computed by the server radio terminal UE#1.

According to an example, the determination 180 incolves an error measurement, using statistical error propagation.

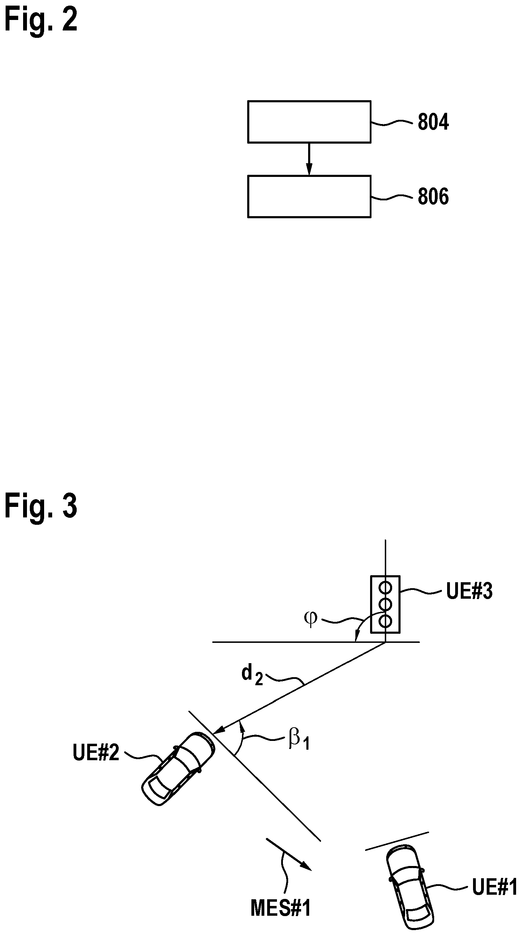

In another example, the redundant measurements (such as the the distances d shown in figures 3 to 8), are used to refine the final absolute position of the respective target UE#2.

For the reason of simpler explanation only UE#1 and UE#3 serve as anchor radio terminals. Of course, there can be more than two anchor radio terminals.

Figure 2 depicts a method to operate the server radio terminal UE#1 in a schematic flow diagram. The determination 180 of figure comprises the following steps. According to step 804, UE#1 performs relative positioning calculations combining positioning measurements from the available measurement reports MES#1-5 in order to determine a relative position information and a relative orientation of the target radio terminal UE#2. According to step 806, UE#1 transforms the relative position and the relative orientation of the target radio terminal UE#2 into the absolute position and the absolute orientation of the target radio terminal UE#2 based on the available absolute position and the absolute orientation of the anchor radio terminal UE#3.

Figure 3 to 9 depict schematically exemplary situations for location determination. Both the server radio terminal UE#1 and the target radio terminal UE#2 are integrated into moving vehicles. The server radio terminal UE#1 also serves as an anchor radio terminal. Further, the anchor radio terminal UE#3 is integrated into a fixed road infrastructure like a traffic light as shown. Other road infrastructure for attaching UE#3 thereto may further include a traffic sign or even a dedicated road-side anchor apparatus. For UE#3, the absolute position with regard to a fixed coordinate system and the absolute orientation in form of an angle ϕ with respect to a fixed cardinal direction like the northern direction. The absolute position and absolute orientation form the absolute position information.

According to figure 3, UE#3 transmits sidelink positioning reference signals that are received by UE#2. UE#2 is then able to determine a distance d2 for example in form of a signal propagation delay and an angle of arrival β1. The distance d2 and the angle of arrival β1 are conveyed to the server radio terminal UE#1 in form of or as part of the sidelink measurement report MES#1.

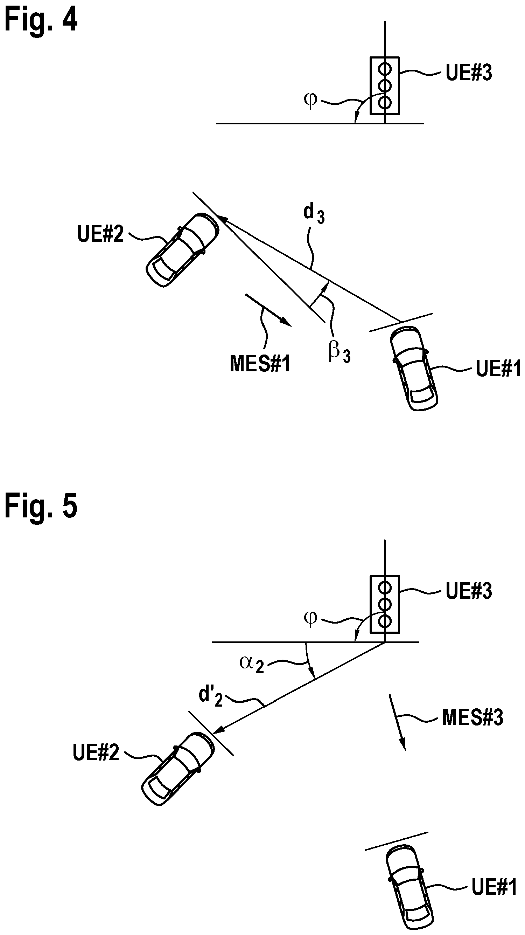

According to figure 4, UE#1 transmits sidelink positioning reference signals that are received by UE#2. UE#2 is then able to determine a distance d3 for example in form of a signal propagation delay and an angle of arrival β3. The distance d3 and the angle of arrival β3 are conveyed to the server radio terminal UE#1 in form of or as part of the sidelink measurement report MES#1.

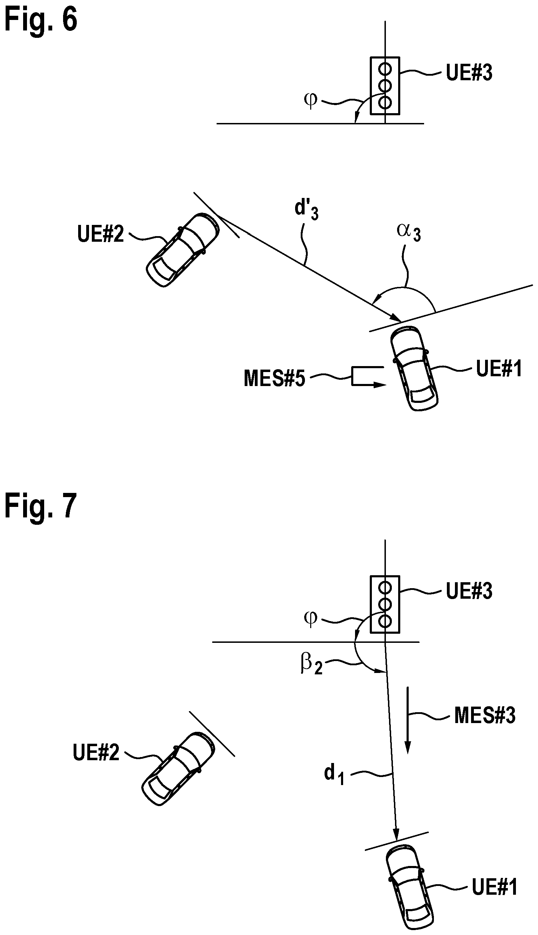

According to figure 6, UE#2 transmits sidelink positioning reference signals that are received by UE#1. UE#1 is then able to determine a distance d'3 for example in form of a signal propagation delay and an angle of arrival α3. The distance d'3 and the angle of arrival α3 are at least temporarily stored on server radio terminal UE#1 in form of the sidelink measurement report MES#5.

According to figure 7, UE#1 transmits sidelink positioning reference signals that are received by UE#2. UE#2 is then able to determine a distance d1 for example in form of a signal propagation delay and an angle of arrival β2. The distance d1 and the angle of arrival β2 are conveyed to the server radio terminal UE#1 in form of or as part of the sidelink measurement report MES#3.

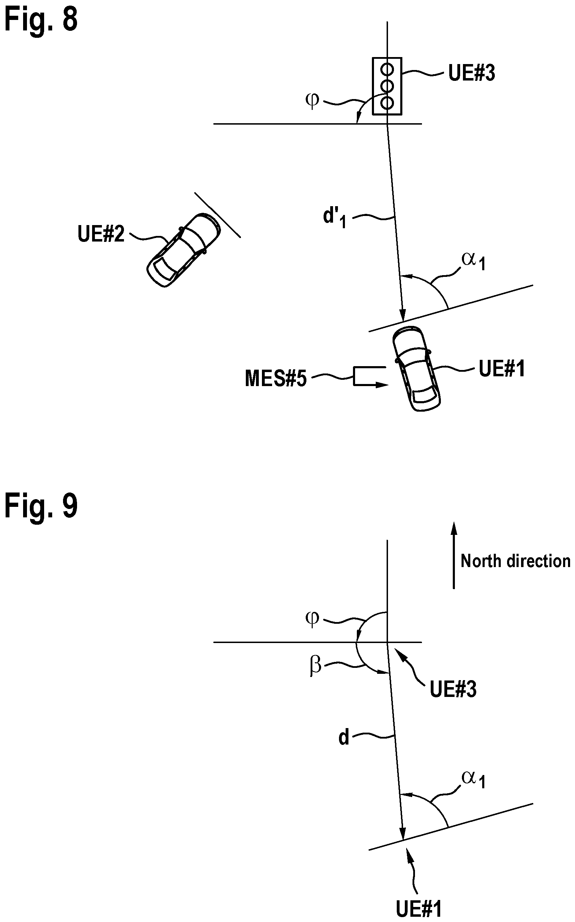

According to figure 8, UE#3 transmits sidelink positioning reference signals that are received by UE#1. UE#1 is then able to determine a distance d'1 for example in form of a signal propagation delay and an angle of arrival α1. The distance d'1 and the angle of arrival α1 are temporarily stored at the server radio terminal UE#1 in form of or as part of the sidelink measurement report MES#5.

According to figure 9, the received or determines measurement reports MES#1-5 are combined by the server radio terminal UE#1 to get relative positioning of the target UE, optionally in polar coordinates. UE#1 determines the absolute coordinates of the radio terminals participating in the sidelink positioning procedure that were relatively positioned in the previous step, either directly, or by propagating the absolute position and orientation of UE#3. Figure 9 illustrates how the measurements of the two angles α, *β* and the distances lead to the determination of the position and orientation of an unknown station (server UE#1 for instance), knowing the position (N, E) and orientation *ψ* of a first station (UE#3 for instance).

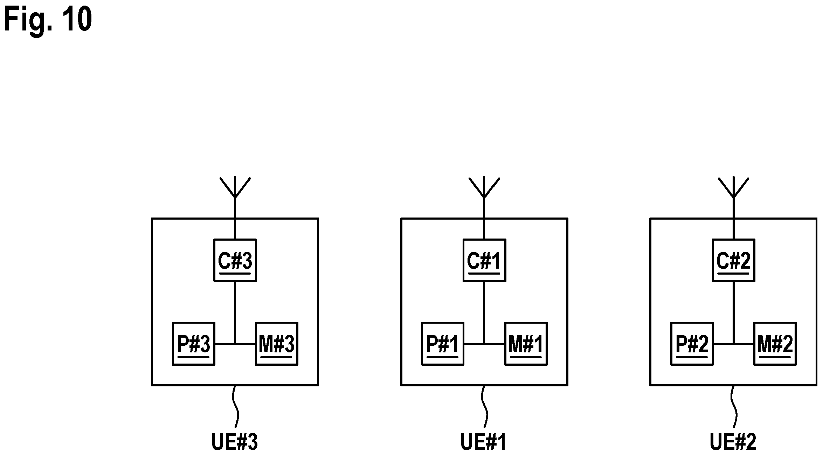

Figure 10 depicts in a schematic block diagram, that the radio terminals UE#1, UE#2, UE#3 each comprise at least one processor P#1, P#2, P#3, at least one non-transitory memory M#1, M#2, M#3 including computer program code, and at least one radio communication module C#1, C#2, C#3 that comprises a respective antenna. The computer program code is adapted to cause the respective radio terminal UE#1-3 to execute the steps of this description.

## Claims

1. A radio terminal, especially a server radio terminal (UE#1) or target radio terminal (UE#2), comprising at least one processor; at least one memory including computer program code; and at least one radio communication module; the at least one processor, the at least one memory, the at least one computer program code, and the at least one radio communications module cause the radio terminal to perform at least:
receiving (130, 150, 160), via a sidelink channel, and/or determining at least one sidelink measurement report (MES#1-5) associated with at least one of a plurality of radio terminals (UE#1-3) participating in a sidelink positioning procedure (SLP), wherein the at least one sidelink measurement report (MES#1-5) indicates at least one relative position of at least one of the radio terminals (UE#1-3) participating in the sidelink positioning procedure (SLP); and
receiving (170), via the sidelink channel, at least one absolute position information (AP#3) from at least one anchor radio terminal (UE#3), wherein the at least one absolute position information (AP#3) indicates an absolute position and absolute orientation of the at least one anchor radio terminal (UE#3) that participates in a sidelink positioning procedure (SLP).

2. The radio terminal according to claim 1, wherein the radio terminal further performs:
determining (180) an absolute position information (AP#2) indicating an absolute position and absolute orientation of a target radio terminal (UE#2) based on the received at least one absolute position information (AP#3) indicating the absolute position and absolute orientation of the at least one anchor terminal (UE#3), and based on the at least one sidelink measurement report (MES#1-5).

3. The radio terminal according to claim 1 or 2, wherein the radio terminal further performs:
transmitting, via the sidelink channel or via an uplink channel, the at least one sidelink measurement report (MES#1-5) along with the at least one absolute position information (AP#3) from at least one anchor radio terminal (UE#3).

4. The radio terminal according to one of the preceding claims, wherein the radio terminal further performs:
transmitting (169), via the sidelink channel, a request (RAP#3) to provide the at least one absolute position information (AP#3); and
wherein the at least one absolute position information (AP#3) is received as a response to the request (RAP#3).

5. The radio terminal according to one of the preceding claims, wherein the radio terminal further performs:
receiving (110), via the sidelink channel, a capability indicator (CI#3) that indicates the capability of at least one of the anchor radio terminals (UE#3) to provide the absolute position and absolute orientation of the at least one of the anchor radio terminals (UE#3).

6. The radio terminal according to one of the preceding claims, wherein the at least one or a further received sidelink measurement report (MES#1, MES#2) indicates a relative position of the target radio terminal (UE#2) in relation to the at least one anchor radio terminal (UE#3) that is able to provide its absolute position.

7. The radio terminal according to one of the preceding claims, wherein the at least one or a further received sidelink measurement report (MES#3) indicates a relative position of a further anchor radio terminal (UE#1) in relation to the at least one anchor radio terminal (UE#3) that is able to provide its absolute position.

8. The radio terminal according to one of the preceding claims, wherein the at least one or a further received sidelink measurement report indicates a relative position of a further anchor radio terminal (UE#1) in relation to at least one another anchor radio terminal that is not able to provide its absolute position.

9. A method to operate a radio terminal, especially a server radio terminal (UE#1) or target radio terminal (UE#2), the method comprising:
receiving (130, 150, 160), via a sidelink channel, and/or determining at least one sidelink measurement report (MES#1-5) associated with at least one of a plurality of radio terminals (UE#1-3) participating in a sidelink positioning procedure (SLP), wherein the at least one sidelink measurement report (MES#1-5) indicates at least one relative position of at least one of the radio terminals (UE#1-3) participating in the sidelink positioning procedure (SLP);
receiving (170), via the sidelink channel, at least one absolute position information (AP#3) from at least one anchor radio terminal (UE#3), wherein the at least one absolute position information (AP#3) indicates an absolute position and absolute orientation of the at least one anchor radio terminal (UE#3) that participates in a sidelink positioning procedure (SLP).

10. An anchor radio terminal (UE#3) comprising at least one processor; at least one memory including computer program code; and at least one radio communication module; the at least one processor, the at least one memory, the at least one computer program code, and the at least one radio communications module cause the anchor radio terminal (UE#3) to perform at least:
a-priori knowing an absolute position and absolute orientation of the anchor radio terminal (UE#3);
transmitting (370), via a sidelink channel, at least one absolute position information (AP#3) to a server or target radio terminal (UE#1, UE#2), wherein the at least one absolute position information (AP#3) indicates the a-priori known absolute position and absolute orientation of the anchor radio terminal (UE#3) that participates in a sidelink positioning procedure (SLP).

11. The anchor radio terminal (UE#3) according to claim 10, wherein the anchor radio terminal (UE#3) further performs:
receiving (369), via the sidelink channel, a request (RAP#3) to provide the at least one absolute position information (AP#3); and
wherein the absolute position information (AP#3) is transmitted as a response to the request (RAP#3).

12. The anchor radio terminal (UE#3) according to claim 10 or 11, wherein the anchor radio terminal (UE#3) further performs:
transmitting (308, 312), via the sidelink channel, a capability indicator (CI#3) that indicates the capability of the anchor radio terminal (UE#3) to provide the absolute position and absolute orientation of the anchor radio terminal (UE#3).

13. The anchor radio terminal (UE#3) according to one of the claims 10 to 12, wherein the anchor radio terminal (UE#3) further performs:
determining (344) at least one sidelink measurement report (MES#2) associated with a target radio terminal (UE#2), wherein the at least one sidelink measurement report (MES#2) indicates at least one relative position of the target radio terminal (UE#2) participating in the sidelink positioning procedure (SLP) with respect to the anchor radio terminal (UE#3); and
transmitting (350), via the sidelink channel, the at least one sidelink measurement report (MES#2).

14. The anchor radio terminal (UE#3) according to one of the claims 10 to 13, wherein the anchor radio terminal (UE#3) further performs:
determining (358) at least one sidelink measurement report (MES#3) associated with a further anchor radio terminal (UE#1), wherein the at least one sidelink measurement report (MES#3) indicates at least one relative position of the further anchor radio terminal (UE#1) participating in the sidelink positioning procedure (SLP) with respect to the anchor radio terminal (UE#3); and
transmitting (360), via the sidelink channel, the at least one sidelink measurement report (MES#2).

15. The anchor radio terminal (UE#3) according to one of the claims 10 to 14, wherein the anchor radio terminal (UE#3) has a fixed position at least during the sidelink positioning procedure (SLP).

16. A method to operate an anchor radio terminal (UE#3), the method comprising:
a-priori knowing an absolute position and absolute orientation of the anchor radio terminal (UE#3);
transmitting (370), via a sidelink channel, at least one absolute position information (AP#3) to a server or target radio terminal (UE#1, UE#2), wherein the at least one absolute position information (AP#3) indicates the a-priori known absolute position and absolute orientation of the anchor radio terminal (UE#3) that participates in a sidelink positioning procedure (SLP).
